Europäisches Patentamt

European Patent Office

Office européen des brevets

(19)

(11) Publication number: **0 092 332**
**A2**

(12) **EUROPEAN PATENT APPLICATION**

(21) Application number: **83301854.2**

(22) Date of filing: **31.03.83**

(51) Int. Cl.³: **G 02 B 3/00**, G 02 B 7/26

(30) Priority: **19.04.82 GB 8211233**

(43) Date of publication of application: **26.10.83**
Bulletin 83/43

(84) Designated Contracting States: **BE DE FR GB NL**

(71) Applicant: **IMPERIAL CHEMICAL INDUSTRIES PLC, Imperial Chemical House Millbank, London SW1P 3JF (GB)**

(72) Inventor: **Murray, Robert Thomas, Nether Stowey Bates Lane, Helsby Cheshire (GB)**

(74) Representative: **Hall, David Brian et al, Imperial Chemical Industries PLC Legal Department: Patents Thames House North Millbank, London SW1P 4QG (GB)**

(54) **Lens.**

(57) Rod lenses comprise one or more transparent balls, e.g. sapphire bearings, embedded in a tramsparent cylinder of lower refractive index. Single ball lenses are particularly useful as collimating lenses for fibre optics, being cheap to make with high accuracy. Lenses having two spaced balls can be made to give erect images with 1:1 magnification, and arrays of such lenses are particularly suitable for various reprographic applications.

Q.32261 /EP

LENS

The invention relates to rod lenses of novel configuration, to arrays of such lenses and to methods of constructing them.

Rod lenses are used, inter alia, as collimating lenses in fibre optics. For example, a rod lens adhered to the end of an optical fibre may be used to collimate light from the fibre into a parallel beam, or to focus a parallel beam onto the end of the fibre. We are aware of rod lenses sold for such purposes, which have a graded refractive index, the latter decreasing progressively from the central axis of the rod outwards. These are particularly convenient to use as they are able to have flat end faces orthogonal to the axis, it being the graded refractive index rather than the shape of the end faces which provides the collimation of the light. However, precision grading of the refractive index tends to be expensive and such lenses, by suffering from chromatic aberation, have low coupling efficiency with optical fibres when using white or other wide bandwidth light.

According to one aspect of the present invention, there is provided a rod lens comprising at least one·spherical ball embedded within a material of lower refractive index, the ball and embedding material being transparent to radiation within a common waveband within a range extending inclusively from the infra red to the ultra violet, the lens being shaped or masked such that all light which passes axially through the lens necessarily passes through the ball.

A preferred lens is one which is cylindrical in shape, having flat parallel end faces and a diameter equal to the diameter of the ball.

On passing through each interface between the ball and embedding material the light becomes refracted, and the amount of refraction depends on the change in refractive index when crossing the ball/ embedding material interface. We prefer that this refractive index difference be as large as possible, differences greater than 0.2 being readily attainable and preferred. For most applications we prefer that the refractive index of the embedding material be constant throughout the length of the lens, so that the refractive index only changes at the two ball/embedding material interfaces, and that the change is the same for each interface. However, for specific applications where it is advantageous to do so, the embedding material can readily be formed from materials of different refractive index on either side of the ball so that the refractive index changes at the two interfaces are different.

The present rod lens is particularly suitable for use with optical fibres, and at present optical fibres can be obtained which can transmit all the visible wavelengths, the near ultra-violet and light extending well into the infra-red. For use with such versatile optical fibres, we prefer that both the ball and the embedding materials are also transparent to a similar wide range of wavelengths. However, where the purpose is solely for use with a portion of that spectrum (only the infra-red end, for example), provided both materials are transparent over the whole range of wavelengths to be used, it is immaterial whether their transparency extends also into other regions, such as the visible region when only infra-red light is to be used.

According to a further aspect of the present invention, a method of constructing a rod lens comprises forming or otherwise acquiring a first material in the shape of a spherical ball, placing the ball in a mould and casting around the ball a second material of lower refractive index so as to embed the ball in the second material, the ball and embedding materials being transparent to radiation within a common waveband within a range extending inclusively from the infra red to the ultra violet.

When constructing our preferred cylindrical lens, we prefer that the mould be cylindrical so that the curved surface of the lens is formed during casting. An alternative is to cast a different shape, e.g. a square cross-section, and to grind off the edges to form the cylindrical lens, but this requires more operations without giving any obvious advantage. However, we prefer that the ends be formed by grinding and polishing the ends of over-length cylinders, as necessary, rather than by attempting to form the end faces during the casting procedure.

Particularly suitable for the balls of our invention are sapphires. Sapphire balls are manufactured commercially for use in bearings and hence are available at mass-production prices. They have a high refractive index and melting point, and hence provide considerable scope for selection of the embedding material. Suitable embedding materials include lower refractive index glasses of lower melting point than the material of the ball, or curable liquids which can be set to a rigid or elastomeric solid, e.g. polymethyl methacrylate or transparent silicone rubber. In the former case the molten embedding material is poured around a ball in the mould and allowed to harden by cooling. In the latter case the liquid resin is activated, e.g. by addition of catalyst and allowed to harden by cross-linking, with the addition of heat where necessary.

We prefer to construct the lens such that one end of the cylinder (the "first end") is positioned at the focus for collimated light incident upon the other end (the second end), at least at one wavelength within the transparency waveband referred to above. The refractive index is generally a function of wavelength, and where the ratio of the ball and cylinder refractive indexes is constant with changes in wavelength, collimated light incident upon the second end will then be focussed onto the first end, irrespective of wavelength. Where the materials cannot be matched in this way, this focal length relationship will only be strictly true for a single wavelength, due to chromatic aberration. When such a lens is used for feeding a parallel beam into an optic fibre or for providing a parallel beam from a fibre secured to the first face, it is preferred that the chromatic aberration diameter be equal to or less than the diameter of the fibre core.

So long as the second end is required to collect or emit parallel light, the length of cylinder between the ball and the second end is not critical, and hence in general we prefer to make that as short as possible.

A rod lens having only a single ball, is an inverting lens. This is generally of no consequence when the lens is used with fibre optics, e.g. as described above, but for a number of other potential applications, such as those described in more detail hereinafter, it is desirable to obtain an upright image. This can be achieved by using two of the lenses described above in axial alignment. They may be glued or welded together if their lengths are appropriate to the desired focussing requirements, or they may be mounted with adjustable spacing, thereby to enable the focal length of the combination to be adjusted. However, for most purposes we prefer to form the lenses as intergral, fixed focal length units having two or more balls in line, even numbers of balls being required for a non-inverted image.

Accordingly, another aspect of the present invention provides a rod lens comprising a plurality of spherical balls held in spaced apart relationship along the axis of the lens with intervening material between each adjacent balls having a refractive index less than that of each of the two balls, and intervening material being transparent to radiation within a common waveband within a range extending inclusively from the infra red to the ultra violet, and the spacing between each two adjacent balls being greater than or equal to the sum of their focal lengths and less than or equal to twice the sum of their focal lengths, the focal lengths in each case being in situ focal lengths.

A preferred plural-ball lens has end caps extending axially from at least one of the two outer balls, the material of the end cap being transparent within the common waveband and having a refractive index which is less than that of the outer ball from which it extends, the end cap having a flat end face orthogonal to the axis of the lens. End caps may be formed at just one or at both ends of the lens. Where an end cap is provided merely for obtaining a flat end face, the axial thickness of the end cap can be as low as zero at the point where the end face, being a tangential plane, touches the ball, the remainder of the end cap extending axially from the ball surface by distances as the ball curves away from that plane.

In describing the lenses herein, we refer to the focal lengths of the balls as "in situ focal lengths", and by this we mean the focal lengths as measured with the balls having the same intervening materials and end cap (if any) as may be present in the complete lens. The in situ focal length is thus the distance in the intervening material of the focus for collimated light incident on the other side of the ball.

For some applications, we prefer the intervening material to be a solid material, and as such may be cast from a low refractive index glass or settable resin in essentially the same manner as the embedding material for the single ball lens described above. This is particularly useful where shapes other than cylindrical shapes are desired, in that it enables post-forming operations, such as grinding to be carried out for achieving the desired cross-section.

A more powerful lens, however, can be obtained by increasing the change in refractive index at each ball/intervening material interface, the maximum change being provided when the intervening material is air. This can be achieved by holding adjacent balls apart by suitable support means, such as a short cylindrical tube into the mouth of which at each end a ball may be seated and glued or cemented to hold it in place.

An image conduit for looking through boreholes, e.g. into enclosed spaces, can be provided by using a plurality of spaced apart balls in alignment. The balls are spaced such that each in forming an image provides a virtual object for the next. We prefer to use an even number of balls, thereby to obtain a non-inverted image. Such conduits can usefully be used in conjunction with separate external collimating or focussing lenses.

A particularly useful form of plural-ball lens is one having only two balls spaced as defined above. These can be used to provide an upright image, with an overall magnification of unity. They can be formed with either a moulded transparent solid or with air as intervening material. For most applications it is desirable to provide the lens with end caps, as described above. When fashioned with a cast solid intervening material, and the two balls thus embedded between the intervening material and the end caps, such a two-ball lens is similar to a pair of single-ball lenses secured together end to end, but has advantages over the joined lenses in use in that there is no disruptive join to give scatter and other losses, and during manufacture in that the balls can be positioned accurately before casting of the intermediate material, thereby avoiding spacing and alignment imprecisions which can so readily occur when joining two lenses together.

The two-ball lens can be used for fibre optic work, but to such applications it generally brings little advantage over the simpler single-ball lens. However we find that its ability to provide a 1:1 erect image renders it particularly useful in a number of reprographic applications, especially when used in conjunction with a plurality of essentially similar lenses to produce an image by dividing the image formation among the different lenses. Accordingly a still further aspect of the invention provides an array of two ball lenses secured together with their axes parallel and their corresponding balls coplanar, thereby to form an array of lenses, the array having masking means isolating at least part of each lens from any adjacent lens, such that all light leaving the lens through the ball at one end must have also passed through the ball at the other end.

Such an array can be used advantageously in a photocopier, electronic copier or other apparatus where an image of a large close object, such as a manuscript, is required to form an image onto a light sensitive drum or light-sensitive plane. A conventional lens, even a particularly wide angle lens, requires substantial axial distance in order to gather light from the whole width of the document and produce an image that is not unacceptably distored. By using a separate lens to provide the image of each separate portion of the manuscript, the distance between the manuscript and the image can be reduced very significantly.

It is a practice in a number of reprographic machines to build up the image by scanning the manuscript from one end to the other, e.g. while an image receiving drum rotates. With such apparatus we prefer to use an elongated array. With cylindrical lenses, a single row of closely packed lenses, while covering the whole of the manuscript area in a single scan, does not receive a uniform quantity of light from different parts. Accordingly one preferred form of array consists essentially of two straight rows of lenses, the rows being parallel and staggered.

Such a two row array can provide an effective compromise with an array of cylindrical lenses, but lenses with other than circular cross-sections can also be used in an array of this form, with varying effect.

Any part of an array area which is not formed of a lens produces variations in light transmission, essentially in the manner described above for a single row of cylindrical lenses. Indeed cylinders and all other similar shapes with all convex sides are particularly bad in this respect. A preferred array is one in which each lens is shaped in transverse section to match the shape of each adjacent lens, and in which the lenses are arranged to provide a space filling mosaic.

By using a space filling mosaic we obtain a minimum included void area, which can be limited substantially to the thickness of a glue line or opaque barrier for separating adjacent lenses optically. These criteria can be met by various curved and straight sided shapes if re-entrant configurations are used.

However, re-entrant configurations can be difficult to manufacture, and hence are preferably avoided. We also prefer to use the same shape for all lenses, and to meet the criteria with such restrictions requires a three, four or six sided figure, such as triangles, quadrilaterals (preferably with at least one pair of parallel sides) and parallel sided hexagons. The latter need not be regular from a space filling stand point as an array of squashed hexagons can also be formed with minimum area, but from optical considerations we generally prefer to use lenses having an equilateral triangle, square or regular hexagon as cross-section.

A useful variation is an array consisting essentially of a single straight row of lenses shaped to provide a substantially constant thickness of transparent lens material throughout the length of the row. For this variant, we prefer to use shapes such as parallelograms and trapesia with their parallel sides aligned and their oblique faces overlapping, thereby to avoid having opaque inter-lens glue lines running parallel to the direction of scanning movement by the array.

To provide an erect image with a magnification of unity, a two ball lens (whether alone or in an array) can have a ball separation anywhere within the range of one to two times the sum of their in situ focal lengths. The optimum depends on the relative importance of three desiderata to each particular application:

(a)     that the overal object-image distance shall be a minimum

(b)     that the resolution shall be a maximum, and

(c)     that illumination of the image shall be uniform.

Thus (a) can be obtained by using small balls, and an interball separation of twice the sum of their in situ focal lengths. However for a small ball, wavelength aberrations become dominant, giving diffraction patterns and hence poor resolution, but larger balls produce correspondingly large spherical aberrations. Maximum uniformity of illumination occurs when both the image and object are at infinity. We find that a particularly useful compromise is obtained when the interball separation is between 1.2 and 1.7 times the sum of their in situ focal lengths.

The invention is illustrated by reference to specific embodiments shown in the accompanying drawings, in which

Figure 1 is a section through a single ball lens marked with critical dimensions used in calculations below,

Figure 2 is a section through a mould and partially fabricated lens of the kind shown in Figure 1,

Figure 3 is a section through a typical two ball cylindrical lens, and

Figure 4 is a section through part of an array of two ball lenses.

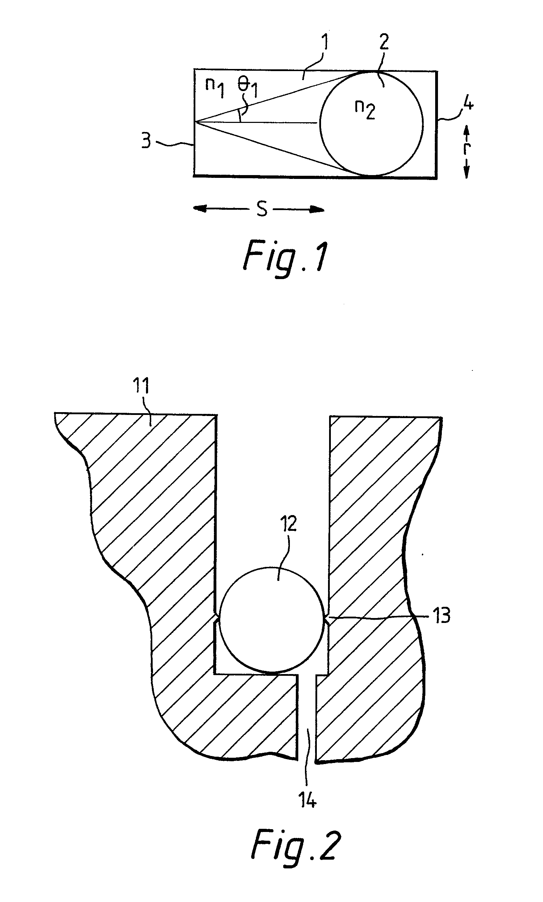

The lens of Figure 1 comprises a sapphire ball 2 embedded in a cylinder 1 in Hoya $FF_1$, glass. The ball is a commercially produced ball sold for use in bearings, and the cylinder is produced by casting molten glass around the ball in a mould, and grinding and polishing the end faces 3, 4 to give the desired length S between the first face 3 and the surface of the sapphire. This can be calculated as follows:

Refractive index $n_1$ in $FF_1$ glass = 1.51
Refractive index $n_2$ of sapphire = 1.77
Difference in refractive index n = 0.25
Radius of sapphire ball r = 1 mm

The require distance S is given by the formula

$$S = r\left(\frac{N_2}{2 \ \Delta n} - 1\right)$$

= 2.44 mm

By simple geometry, the maximum value of $\sin \theta_1$ i.e. the Numerical Aperture in the glass = 0.29.

This lens was designed for use in the waveband of 600 to 1000 mm, i.e. the red and near infra-red region. From published refractive index data on these two materials, the relative change of refractive index for those two materials over this range of wavelengths is given by:

$$\Delta\left(\frac{n_2}{n_1}\right)_{\lambda \ = \ 600-1000} = 7 \times 10^{-5}$$

As this result is not zero, there will be some chromatic aberration. This can be determined by the approximation.

$$\Delta Y_c \simeq \Delta \left(\frac{S}{r}\right)_{\lambda \ = \ 600-1000} .x. \sin \theta_1$$

$$\simeq 1\mu m$$

where $\Delta Y_C$ is the chromatic aberration radius. This is very much smaller than the radius of current commercial optical fibres having typical core radii of 100, 50 and 30 nm, giving the possibility of accurate coupling throughout this range of wavelengths.

In Figure 2, a split mould 11 contains a sapphire ball 12 awaiting cylinder material. Around the sides of the mould are three fine studs 13, just sufficiently large to allow cylinder material to flow past the ball. At the base of the mould is a fine tube 14 to enable air to escape. The method is illustrated by the formation of a lens in which the cylinder is cast from a resin cross-linkable at ambient temperatures. The resin is first prepared by mixing in the appropriate catalyst and then it is forced into the mould, around the sides of the ball, and into the escape tube 14. Where the resin is not too volatile we prefer to assist the resin flow by applying vacuum to the escape tube, even chilling the resin if necessary to prevent boiling. However, where vacuum assistance is not practicable, resin flow may be assisted by pressurising the resin container and thereby forcing the resin forward, although this variation is more prone to contamination by residual air at the lower face. Nevertheless, with the very small gap sizes used, some form of flow assistance is generally desirable with most resins. When the mould is full, the resin is left to cure at ambient temperature, possibly with gentle warming of any chilled resin.

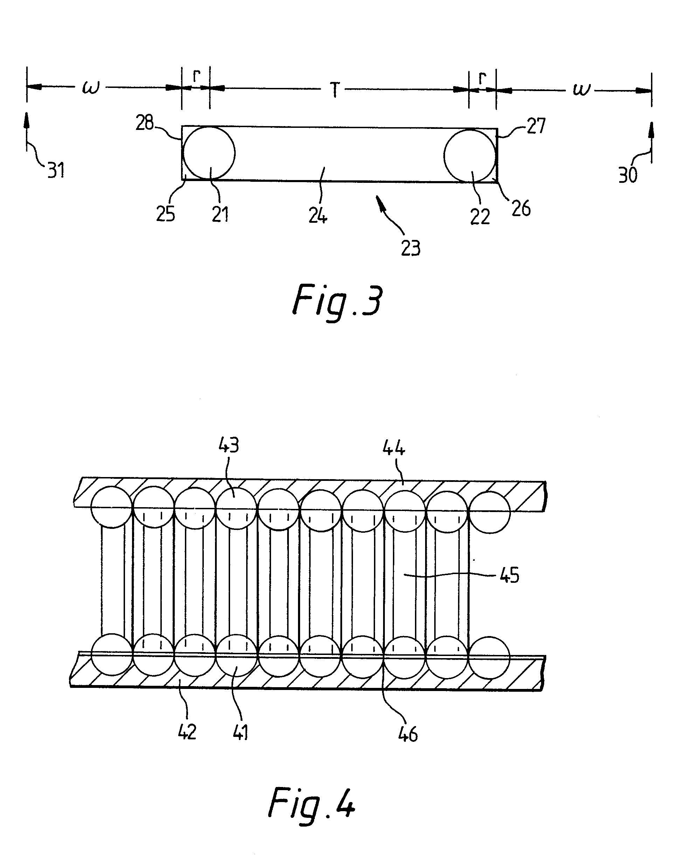

The two ball lens shown in Figure 3 comprises two sapphire balls, 21, 22, embedded in a cylinder 23 of polymethyl methacrylate, thus having an intermediate material 24 and end caps 25, 26 formed of the same material. The end caps have polished flat faces 27, 28 in parallel planes, tangential to the balls. The lens has been designed to fall within our preferred dimensions, having an interball distance of 1.5 times the sum of their focal lengths. In the drawing, the lens is positioned to provide an erect image 30 of an object 31 with a magnification of 1:1. The dimensions are shown below, where the reference letters are those shown in the drawing.

| | |
|---|---|
| refractive index of sapphire ($n_2$) | = 1.77 |
| refractive index of PMMA ($n_1$) | = 1.50 |
| ball radius (r) | = 0.5 mm |
| interball distance (T) | = 4.92 mm |
| total length of lens (T + 2r) | = 5.92 mm |
| distance from object/image to lens (w) | = 2.94 mm |

This gives a total object-image distance of only 11.8 mm.

The array of Figure 4 comprises a coplanar lower set of balls 41 embedded in a communal end cap 42. An upper set of coplanar balls 43 are similarly embedded in an end cap 44. The upper and lower sets of balls are held in rigid spaced apart relationship by a hexagonal steel honeycomb 45, bonded to the balls. The balls are close packed, and the spaces left between them in the upper layer are sealed with an opaque filler. The intermediate material in this case is not a solid, but air, and fine pressure release vents 46 are left in the lower ball plane by embedding the balls to a slightly lesser extent, thereby leaving a communicating matrix of small gaps across the array, with only marginal loss of optical qualities. In this array, the steel honeycomb acts as an opaque barrier for dividing one lens from its adjacent lens so that all the light emerging from each lower ball must have come through its partner in the upper plane. The interball distances
are all set to give a 1:1 magnification, this being
important for crisp image formation with an array.

CLAIMS

1. A rod lens comprising at least one spherical ball embedded within a material of lower refractive index, the ball and embedding material being transparent to radiation within a common waveband within a range extending inclusively from the infra red to the ultra violet, the lens being shaped or masked such that the light which passes axially through the lens necessarily passes through the ball.

2. A rod lens as claimed in Claim 1 which is cylindrical in shape, having flat parallel end faces and a diameter equal to the diameter of the ball.

3. A rod lens as claimed in Claim 1 or Claim 2 in which the refractive index of the embedding material is constant throughout the length of the lens.

4. A rod lens as claimed in Claim 2 or Claim 3, in which one end of the cylinder is positioned at the focus for collimated light incident upon the other end, for at least at one wavelength within the transparency waveband.

5. A rod lens comprising a plurality of spherical balls held in spaced apart relationship along the axis of the lens with intervening material between each two adjacent balls having a refractive index less than that of each of the two balls, the balls and intervening material being transparent to radiation within a common waveband within a range extending inclusively from the infra red to the ultra violet, and the spacing between each two adjacent balls being greater than or equal to the sum of their focal lengths and less than or equal to twice the sum of their focal lengths, the focal lengths in each case being in situ focal lengths.

6.     A rod lens as claimed in Claim 5, having an end
cap extending axially from at least one of the two
outer balls, the material of the end cap being
transparent within the common waveband and having a
refractive index which is less than that of the outer
ball from which it extends, the end cap having a flat
end face orthogonal to the axis of the lens.

7.     A rod lens as claimed in Claim 5 or Claim 6, in
which the intervening material is a solid material.

8.     A rod lens as claimed in Claim 5 or Claim 6, in
which the intervening material is air.

9.     A rod lens as claimed in any one of claims 5 to
8, having only two balls.

10.     A rod lens as claimed in Claim 9 wherein the
interball separation is between 1.2 and 1.7 times the
sum of their in situ focal lengths.

11.     A plurality of rod lenses as claimed in Claim 9,
or Claim 10, secured together with their axes parallel
and their corresponding balls coplanar, thereby to form
an array of lenses, the array having masking means
isolating at least part of each lens from any adjacent
lens, such that all light leaving the lens through the
ball at one end must have also passed through the ball
at the other end.

12.     An array as claimed in Claim 10, consisting
essentially of two straight rows of lenses, the rows
being parallel and staggered.

13.     An array as claimed in Claim 10 in which each
lens is shaped in transverse section to match the shape
of each adjacent lens, and in which the lenses are
arranged to provide a space filling mosaic.

14.    An array as claimed in Claim 12 in which the cross sections of the individual lenses are equilateral triangles, squares or regular hexagons.

15.    An array as claimed in Claim 12 consisting essentially of a single straight row of lenses shaped to provide a substantially constant thickness of transparent lens material throughout the length of the row.

16.    A method of constructing a rod lens comprising forming or otherwise acquiring a first material in the shape of a spherical ball, placing the ball in a mould and casting around the ball a second mterial of lower refractive index so as to embed the ball in the second material, the ball and embedding materials being transparent to radiation within a common waveband within a range extending inclusively from the infra red to the ultra vilolet.

17.    A method as claimed in Claim 16 which comprises embedding one or more balls in a second material to form a lens, and thereafter shaping the lens including the balls therein, to a cross-sectional shape other tha a circle.

*Fig.1*

*Fig.2*

0092332

## Fig.3

## Fig.4